# EUROPEAN PATENT APPLICATION

(11) **EP 4 206 656 A1**
(43) Date of publication of application: **05.07.2023**
(21) Application number: 21217936.0
(22) Date of filing: 28.12.2021
(51) Int. Cl.: G01N 21/65, G01J 3/44, G01N 21/64

(54) **METHOD FOR ENHANCING A RAMAN CONTRIBUTION IN A SPECTRUM, SPECTROSCOPY SYSTEM AND NON-TRANSITORY COMPUTER-READABLE STORAGE MEDIUM**

(71) Applicant: Serstech AB, 227 64 Lund (SE)
(72) Inventor: Szybek, Katja, 223 50 Lund (SE)
(74) Representative: AWA Sweden AB

(57) **Abstract**

The present invention relates to a method (500) for enhancing a Raman contribution in a spectrum of a sample (102), the method (500) comprising: Recording (504) a first spectrum of light (200) comprising information associated with ambient light and a first measurement response, wherein the first measurement response comprises a first optical response and a first Raman response of the sample (102) in response to being illuminated with light (104), having a first spot size (103b), from a light source (110). Recording (508) a second spectrum of light (300) comprising information associated with ambient light and a second measurement response, wherein the second measurement response comprises a second optical response and a second Raman response of the sample (102) in response to being illuminated with light (104), having a second spot size (103a), from the light source (110). Wherein the first spot size (103b) is larger than the second spot size (103a), whereby a contribution, to the first measurement response, of the first Raman response in relation to a contribution of the first optical response is smaller than a contribution, to the second measurement response, of the second Raman response in relation to the second optical response. Forming (510) a data set (400) based on a dissimilarity between the first spectrum (200) and the second spectrum (300), thereby enhancing a contribution of a Raman response to the formed data set (400). A spectroscopy system (100) and a non-transitory computer-readable storage medium are also disclosed.

## Description

### Filed of the Invention

The present invention generally relates to a method for enhancing a Raman contribution in a spectrum, a spectroscopy system and a non-transitory computer-readable storage medium.

### Background of the Invention

To detect and to determine different substances is highly desired in a large variety of applications ranging from chemical analysis to in-field determination of potentially hazardous and toxic substances. In many situations correct determination of a substance is of utmost importance.

For instance, to be able to determine if a substance is hazardous, e.g. explosive, or not is critical since a wrongful determination may result in severe consequences potentially with personnel injuries and material losses. Similarly, it may also be critical to determine if a substance is toxic or not since a wrongful determination may result in serious consequences involving personnel and environmental risks. Further, it is highly important to verify that a drug is correctly synthesized since a wrongfully synthesized drug may become harmful instead of curative for a subject.

When detecting and determining different substances different approaches may be used.

A common way used to investigate properties of a substance is to let the substance undergo a chemical analysis. A chemical analysis of a substance is often accurate but is typically suffering from complexity and the time required for the analysis. Moreover, chemical analysis often require that various further substances or analytes are used or involved in the analysis. Such analysis therefore tends to become costly and time consuming. Another drawback resides in that such analysis are generally too complicated and time consuming to be conducted under field conditions.

Another commonly used approach for detecting and determining different substances is to use some form of spectroscopic analysis. A common type of spectroscopy used in this case is optical spectroscopy where light having interacted with the substance in question is analyzed using a spectrometer. The light interacting with the substance is scattered by the substance resulting in that the scattered light is affected by the substance. Such scattering from a substance can either be elastic or in-elastic. In elastic scattering the photons of scattered light exhibit the same energy as the photons impinging on the substance at hand. In in-elastic scattering the photons of scattered light exhibit a different energy as compared to the photons impinging on the substance at hand. In-elastically scattered photons therefore either gain or lose energy.

Both elastically and in-elastically scattered photons may be used in spectroscopic analyses of substances. When looking at elastically scattered photons certain properties, such as color, of the substance may be determined. However, when it comes to determining a certain substance more sophisticated spectroscopic techniques also relying on in-elastically scattered photons are generally required.

Raman spectroscopy is a spectroscopic technique relying on in-elastic scattering of photons, known as Raman scattering. In Raman spectroscopy a source of monochromatic light, usually from a laser, is used. The light source may emit light in the visible, near infrared, or near ultraviolet range, although X-rays can also be used. The laser light interacts with molecular vibrations, phonons or other excitations in the molecular system, resulting in that the energy of the laser photons being shifted up or down in the in-elastically scattered light thereof. The shift in energy gives information about the vibrational modes in the molecular system at hand. In other words, in-elastically light scattered from the molecules of the substance at hand gives rise to a vibrational spectrum that includes of a series of lines or peaks constituting a molecular "fingerprint" for the substance. Hence a substance or material will give rise to a unique Raman spectrum, i.e. its "fingerprint". The unique Raman spectrum makes Raman spectroscopy suitable for identifying or determining substances or materials. In many fields of technology Raman spectroscopy is a well-established spectroscopic technique for rapid identifications of substances and chemicals with high degree of accuracy.

A typical Raman spectrum of a substance shows the shift of Raman wavelengths relative to elastically scattered light, typically referred to as Rayleigh-scattered light. The Rayleigh-scattered light has the same wavelength as the incident light of the light source whereas the Raman wavelengths are shifted up or down relative to the Rayleigh-scattered light. The vertical axis of a Raman spectrum typically represents the intensity of the Raman wavelengths and yields the concentration of the chemical components of the sample or substance, whereas the horizontal axis of a Raman spectrum typically represents the wavelength shift in relation to the Rayleigh light.

The light from Raman scattering is typically associated with weak intensities and may be difficult to observe without intense monochromatic excitation and a sensitive detector. Typically, 1 out of 10⁶ - 10⁹ photons scattered by a sample is a photon relating to a Raman wavelength. However, modern technical development of lasers, detectors, and optical components as well as continued miniaturization of electronic components have made it possible to produce fast and reliable portable Raman instruments which are suitable to use under field conditions.

However, owing from the weak nature light emanating from Raman scattering, it may be difficult to acquire a Raman spectrum for a number of reasons.

Light from the laser light source is typically reflected on the substance or sample that is to be detected. Such reflected light is commonly filtered out in order to not disturb the actual Raman measurement which is typically recorded by an image sensor of a spectrometer. However, if only a minor portion of such reflected light reaches the image sensor the reflected light may severely influence the measurement of the Raman wavelengths. The intensity of the reflected light is namely strong as compared to the light of the Raman wavelengths.

Another problem resides in that many substances fluoresce, i.e. show a fluorescent behavior. Fluorescence arises from electronic transitions in so-called fluorophore molecules, when a molecule is excited to a higher electronic state by absorbing a photon and relaxes back to the ground state, the fluorophore molecules will emit a fluorescence photon. For many substances, Raman scattering is a factor 10⁴ - 10⁸ weaker than the fluorescence which may result in that the fluorescence totally obscures the light of the Raman wavelengths emitted by the substance or sample at hand. As discussed above, the light of the Raman wavelengths, i.e. the Raman spectrum, is a set of discrete well-defined line or peaks. Such lines or peaks may be completely obscured by fluorescence which typically light up at a wide range of wavelengths as a featureless background.

Another problem resides in that detector noise may negatively influence the measurements of the light of the Raman wavelengths from a substance or sample.

Moreover, ambient light may reach the detector of the spectrometer and negatively influence the measurements of light of the Raman wavelengths.

Furthermore, stray light form various components of the measurement setup may reach the detector of the spectrometer and negatively influence the measurements of light of the Raman wavelengths.

All above discussed mechanisms may commonly be considered to form a background, i.e. a background with which the light of the Raman wavelengths is intermixed or superimposed.

Different strategies have been suggested in order to reduce the influence of the above discussed mechanisms or the background during Raman measurements on a substance or sample.

For instance, in order to reduce the influence of fluorescence several strategies have been suggested, such strategies include time-resolved Raman spectroscopy, shifted excitation Raman difference spectroscopy, subtracted shifted Raman spectroscopy, sequentially shifted excitation and, pulsed and continuous wave photo bleaching. All these strategies show outspoken limitations still resulting in problems when conducting Raman measurements on a substance or sample.

A common approach to reduce all the above discussed mechanisms at the same time is to focus the light form the laser light source at an optimal point of the substance or sample, i.e. a point where the light of the light of the Raman wavelengths emanating from the sample is strongest. In other words, it has been proposed to move the focal point of the laser light along the spectroscopic axis to find an optimal laser focus position where the Raman signal is sufficiently strong to be detected despite the negative influence of the above described mechanisms. Automatic focusing algorithms or methods has been suggested in this regard.

Despite the above strategies it is still troublesome the conduct reliable and quick Raman spectroscopy measurements where the light of the Raman wavelengths is detectable as required to identify a substance or a material. This is particularly true for in-field Raman spectroscopy measurements.

### Summary of the invention

In view of the above, it is an object of the present invention to provide an improved method for enhancing a Raman contribution in a spectrum of a sample and an improved spectroscopy system.

Another object is to provide such a method and spectroscopy system in which a Raman contribution in a spectrum of a sample is enhanced in relation to a contribution of a background.

Another object is to provide such a method and spectroscopy system which improves a signal to noise ratio of Raman contribution in a spectrum of a sample.

Another object is to provide such a method and spectroscopy system which enables an improved determination of a sample.

Another object is to provide such a method and spectroscopy system which enables an improved determination of a sample under field conditions.

Another object is to provide such a method and spectroscopy system which in which a Raman contribution in a spectrum of a sample in enhanced in relation to a contribution of a reflection of light from an excitation wavelength.

Another object is to provide such a method and spectroscopy system which in which a Raman contribution in a spectrum of a sample in enhanced in relation to a contribution of a fluorescence.

Another object is to provide such a method and spectroscopy system which in which a Raman contribution in a spectrum of a sample in enhanced in relation to a contribution of ambient light.

It is also an object to provide a cost-effective method and spectroscopy system.

To achieve at least one of the above objects and also other objects that will be evident from the following description, a method for enhancing a Raman contribution in a spectrum of a sample having the features defined in claim 1 is provided according to the present inventive concept. A spectroscopy system is provided according to claim 9. A non-transitory computer-readable storage relating to the method for enhancing a Raman contribution in a spectrum of a sample is provided according to claim 16. Preferred variations to the inventive concept will be evident from the dependent claims.

More specifically, according to a first aspect, there is provided a method for enhancing a Raman contribution in a spectrum of a sample, the method comprising: setting a first spot size of light emitted by a light source at a position of the sample; recording a first spectrum of light comprising information associated with ambient light and a first measurement response, wherein the first measurement response comprises a first optical response and a first Raman response of the sample in response to being illuminated with light having the first spot size; setting a second spot size of light emitted by the light source at a position of the sample; recording a second spectrum of light comprising information associated with ambient light and a second measurement response, wherein the second measurement response comprises a second optical response and a second Raman response of the sample in response to being illuminated with light having the second spot size; wherein the first spot size is larger than the second spot size, whereby a contribution, to the first measurement response, of the first Raman response in relation to a contribution of the first optical response is smaller than a contribution, to the second measurement response, of the second Raman response in relation to the second optical response; and forming a data set comprising information associated with the spectrum of the sample based on a dissimilarity between the first spectrum and the second spectrum, thereby enhancing a contribution of a Raman response to the formed data set.

Hereby an improved method for enhancing a Raman contribution in a spectrum of a sample is provided.

The method enhances a Raman contribution in a spectrum of a sample.

The method enhances a Raman contribution in the formed data set.

It should be noted that within the context of this application the term "Raman contribution" may be any contribution to a spectrum related to a Raman scattering, that is in-elastic scattering of a sample. The Raman contribution is thus any content in or contribution to the spectrum related to Raman scattering of the sample at hand. The spectrum typically includes other content than the Raman contribution. Such other content may be related to e.g. Rayleigh scattering, ambient light, stray light and/or sensor noise.

The words "substance" and "sample" are frequently used throughout this disclosure. A "substance" is commonly known as a pure form of matter containing only one type of atoms or molecules. When referring to a "sample", an amount of matter, possibly comprising a compound of substances, is considered. A sample may consist of a single substance, thereby equating the words sample and substance. Generally, a sample may comprise a plurality of different substances. The words sample and substance may however occasionally be used interchangably, which should not confuse the skilled person.

The method comprises setting a first spot size of light emitted by a light source at a position of the sample.

It should be noted that within the context of this application the term "spot size" may be the size of any cross-sectional area of light emitted by the light source at a location where the light impinges on a sample. Hence, the spot size may correspond to the cross-sectional area of a diverging or converging ray of light where the ray impinges on a surface of a sample.

The method includes recording a first spectrum of light in response to being illuminated with light having the first spot size. Hence, a spectrum is recorded while the sample is illuminated with light form the light source. The light of the light source having the first spot size at the location of the sample. In other words, the light emitted from the light source will typically have the first spot size at a surface of the sample facing in a direction from which the light impinges on the sample.

The first spectrum of light is typically recorded using a spectrometer of some kind.

The first spectrum of light comprises information associated with ambient light and a first measurement response.

The first spectrum of light include content associated with ambient light, i.e. light from the surroundings unrelated related to light emitted from the light source.

The first spectrum of light comprises content associated with a first measurement response.

It should be noted that within the context of this application the term "measurement response" may be any response related to any type of interaction or scattering by the sample of light emitted by the light source.

The first measurement response comprises a first optical response and a first Raman response of the sample.

Hence, light scattered by the sample may be light scattered by Raman scattering.

It should be noted that within the context of this application the term "optical response" may be any response related to any type of interaction or scattering by the sample of light emitted by the light source apart from Raman scattering of the sample. Hence, the optical response may for instance include Raileigh scattered light, reflected light and/or light emitted by fluorescence.

Hence, the first spectrum of light includes different content.

The method includes setting a second spot size of light emitted by the light source at a position of the sample. Hence, a second spot size of light emitted by the light source is typically set a at a surface of the sample facing in a direction from which the light impinges on the sample. The position of the first spot size of light at the sample may correspond to the position of the second spot size of light at the sample in the sense that a center point of the first spot size of light at the sample coincides with a center point of the second spot size of light at the sample. The position of the first spot size of light at the sample may not coincide with the position of the second spot size of light at the sample.

A second spectrum of light is recorded while illuminating the sample with light having the second spot size.

The second spectrum of light is typically recorded using a spectrometer of some kind. The first spectrum of light and the second spectrum of light are typically recorded using the same spectrometer.

The second spectrum of light comprising information associated with ambient light and a second measurement response. The second measurement response comprises a second optical response and a second Raman response of the sample. Hence, the method includes recording a second spectrum of light in response to being illuminated with light having the second spot size.

The first spot size is larger than the second spot size. Hence, an intensity of light from the light source at the sample is stronger within the second spot size than within the first spot size since the light of the light source is concentrated to a smaller area of the sample while using the second spot size as compared to the first spot size. By this, a contribution, to the first measurement response, of the first Raman response in relation to a contribution of the first optical response is smaller than a contribution, to the second measurement response, of the second Raman response in relation to the second optical response. Hence, the Raman response is typically stronger and more outspoken in the second spectrum since Raman scattering is proportional to the intensity of the light impinging on the sample.

The method includes forming a data set comprising information associated with the spectrum of the sample based on a dissimilarity between the first spectrum and the second spectrum, thereby enhancing a contribution of a Raman response to the formed data set. Hence, a dissimilarity between the first spectrum and the second spectrum will typically depend on the larger Raman contribution to the second spectrum of light. The Raman response may be enhanced in the sense that the Raman response of the sample is made stronger or more visible as compared to the Raman response of the first spectrum and the second spectrum. The data set may be any type of data set including information associated with the spectrum of the sample, where the data set is based on a dissimilarity between the first spectrum and the second spectrum. The data set may represent a Raman spectrum of the sample. Thus, a contribution of a Raman response to the formed data set may be enhanced. Thus, a contribution of a Raman response to a formed spectrum of the sample may be enhanced.

The present method does in turn allow for more accurate determination, characterization or matching of substances since the actual Raman contribution to the formed data set is enhanced. In practice the actual Raman contribution to a formed spectrum, i.e. a data set, may be enhanced in relation to a standard spectrum recorded using a light beam focused onto the sample. In other words, the formed data set having an enhanced Raman contribution will facilitate characterization or matching of substances based on their molecular "fingerprints", since the actual Raman response of the sample will be enhanced and thus easier to interpret or read out in the formed data set.

The act of setting the spot size may comprise applying a focus voltage to a liquid lens configured to focus the light emitted by the light source, the liquid lens having a focal length being dependent upon the applied focus voltage, which is advantageous in that the spot size may be set in a simple and reliable manner. By setting the spot size by applying a focus voltage to a liquid lens configured to focus the light emitted by the light source, the spot size at the position of the sample may be set and hence controlled by applying different focus voltages to the liquid lens. Further by utilizing a liquid lens to set the set the spot size a solution involving no mechanically movable parts may be realized. Hence, such a solution may be made more sturdy and less prone to damages or malfunction. Hence, such a solution may be used to advantage under field conditions. The liquid lens may be used to advantage in combination with other optical elements, such as a glass lens or glass lenses. The liquid lens may commonly be referred to as a tunable lens.

Hence, the spot size of light at the position of the sample may depend on a convergence of light refracted by the liquid lens. Further, the spot size of light at the position of the sample may depend on a relative position between a focal point of the liquid lens and a portion of the sample being illuminated. The first spot size may be associated with a first longitudinal position of the focal point of the liquid lens. The second spot size may be associated with a second longitudinal position of the focal point of the liquid lens. The liquid lens may set the focal lengths and consequently the spot size within a range.

The first optical response may comprise a first fluorescence response of the sample; and the second optical response may comprise a second fluorescence response of the sample, which is advantageous in that a fluorescence response of the sample may be suppressed in the formed data set. Hence, a fluorescence response of the sample may be suppressed in a spectrum of the sample.

The first optical response and/or the second optical response may comprise one or more of: light reflected from the sample; and Rayleigh scattered light from the sample, which is advantageous in that light reflected from the sample and/or and Rayleigh scattered light from the sample may be suppressed in the formed data set. Hence, light reflected from the sample and/or and Rayleigh scattered light from the sample may be suppressed in a spectrum of the sample.

The method may further comprise forming a difference between the first spectrum and the second spectrum; and wherein the data set is formed based on the formed difference, which is advantageous in that the Raman contribution may be enhanced in the formed data set. Hence, the Raman contribution may be enhanced in a spectrum of the sample. The first spectrum may be subtracted from the second spectrum. In other words, the contribution of the first spectrum may be subtracted from the second spectrum. Put differently, the contribution of the first spectrum may thereby be removed from the second spectrum.

The method may further comprise forming a ratio between the first spectrum and the second spectrum; and wherein the data set is formed based on the formed ratio, which is advantageous in that the Raman contribution may be enhanced in the formed data set. Hence, the Raman contribution may be enhanced in a spectrum of the sample. The second spectrum may be divided by the first spectrum. In other words, the contribution of the first spectrum may thereby be removed from the second spectrum. By forming a ratio between the first spectrum and the second spectrum undesired effects related to the hardware used, such as optical components including spectrometers and sensors, may be reduced or removed. By forming a ratio between the first spectrum and the second spectrum intensity related issues may be reduced or removed. Hence, by forming a ratio between the first spectrum and the second spectrum differences between the spectra may appear more clearly.

The method may further comprise normalizing the first spectrum; normalizing the second spectrum; and wherein the data set is formed based on a dissimilarity between the normalized first spectrum and the normalized second spectrum, which is advantageous in that that the Raman contribution may be enhanced in the formed data set. Hence, the Raman contribution may be enhanced in a spectrum of the sample. Hence, by normalizing the first spectrum and the second spectrum differences between the spectra may appear more clearly. In particular, when subtracting the first spectrum from the second spectrum, by normalizing the first spectrum and the second spectrum differences between the spectra may appear more clearly. For instance, the first spectrum and the second spectrum may be normalized such that a signal level of fluorescence in the first spectrum is similar to a signal level of fluorescence in the second spectrum. For instance, the first spectrum and the second spectrum may be normalized such that a signal level pertaining to a reflection from the sample in the first spectrum is similar to a signal level pertaining to a reflection from the sample in the second spectrum.

The formed data set may be a spectrum, which is advantageous in that the data set, i.e. the spectrum, may be used directly to match or determine a material or substance of the sample. Hence the formed data set may include the "fingerprint" of the material or substance of the sample. Further, other properties of the sample may to advantage be derived from the spectrum of the sample.

According to a second aspect, there is provided a spectroscopy system comprising: a light source; a focusing element configured to direct light emitted by the light source towards a sample, wherein a longitudinal position of a focal point of the focusing element is adjustable; a spectrometer configured to record a spectrum of light; and circuitry configured to execute: a first focal point function configured to set a first longitudinal position of the focal point of the focusing element, whereby a first spot size of light emitted by the light source at a position of the sample is set, a first record function configured to record, using the spectrometer, a first spectrum of light comprising information associated with ambient light and a first measurement response, wherein the first measurement response comprises a first optical response and a first Raman response of the sample in response to being illuminated with light having the first spot size, a second focal point function configured to set a second longitudinal position of the focal point of the focusing element, whereby a second spot size of light emitted by the light source at a position of the sample is set, a second record function configured to record, using the spectrometer, a second spectrum of light comprising information associated with ambient light and a second measurement response, wherein the second measurement response comprises a second optical response and a second Raman response of the sample in response to being illuminated with light having the second spot size, and a form function configured to form a data set comprising information associated with a spectrum of the sample based on a dissimilarity between the first spectrum and the second spectrum; and wherein the first spot size is larger than the second spot size, whereby a contribution, to the first measurement response, of the first Raman response in relation to a contribution of the first optical response is smaller than a contribution, to the second measurement response, of the second Raman response in relation to the second optical response, whereby a contribution of a Raman response to the formed data set is enhanced.

The above-mentioned features of the method, when applicable, apply to this second aspect as well. In order to avoid undue repetition, reference is made to the above.

The light source may be a laser, which is advantageous in that an intense monochromatic light may be emitted from the light source. The light source may be a laser, which is advantageous in that coherent light may be emitted from the light source.

The first optical response may comprise a first fluorescence response of the sample; and the second optical response may comprise a second fluorescence response of the sample.

The first optical response and/or the second optical response may comprise one or more of: light reflected from the sample; and Rayleigh scattered light from the sample.

The focusing element may comprise a liquid lens, the liquid lens having a focal length being dependent upon an applied focus voltage and, wherein the first focal point function and the second focal point function are configured to set the longitudinal position of the focal point of the focusing element by being configured to: apply a focus voltage to the liquid lens. The liquid lens may be used to advantage in combination with other optical elements, such as a glass lens or glass lenses.

The circuitry may be further configured to execute: a subtraction function configured to form a difference between the first spectrum and the second spectrum; and wherein the form function is configured to form the data set based on the formed difference.

The circuitry may be further configured to execute: a division function configured to form a ratio between the first spectrum and the second spectrum; and wherein the form function is configured to form the data set based on the formed ratio.

The circuitry may be further configured to execute: a normalization function configured to normalize the first spectrum and the second spectrum; and wherein the form function is configured to form the data set based on a dissimilarity between the normalized first spectrum and the normalized second spectrum.

The formed data set may be a spectrum.

The spectroscopy system may be a handheld spectroscopy system, which is advantageous in that measurements may be conducted in-field or under field conditions. Further, the spectroscopy system may be brought to the sample meaning that the sample will not have to be collected and transported to laboratory or similar. The spectroscopy system may be used to advantage by Police, Hazmat personnel, medical personnel in their daily field work.

The spectroscopy system may be used to advantage identify, match or determine various substances under field conditions. The spectroscopy system may be used to advantage identify, match or determine explosive substances, hazardous substances, toxic substances, poisonous substances, narcotic substances, illegal substances, drinkware, flammable substances or similar. The spectroscopy system may be used to advantage identify, match or determine explosive substances, hazardous substances, toxic substances, poisonous substances, narcotic substances, illegal substances, drinkware, flammable substances or similar under field conditions.

According to a third aspect a non-transitory computer-readable storage medium is provided. The non-transitory computer-readable storage medium comprises program code portions which, when executed by a device having processing capabilities, performs the method according to the first aspect. In other words, the non-transitory computer-readable storage medium having stored thereon instructions for implementing the method according to the first aspect, when executed on a device having processing capabilities.

The above-mentioned features of the method, when applicable, apply to this third aspect as well. In order to avoid undue repetition, reference is made to the above.

A further scope of applicability of the present inventive concept will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this inventive concept is not limited to the particular component parts of the device described or acts of the methods described as such device and method may vary. It is also to be understood that the terminology used herein is for purpose of describing particular variants only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects of the present inventive concept will now be described in more detail, with reference to appended figures showing variants. The figures should not be considered limiting; instead they are used for explaining and understanding.

As illustrated in the figures, the sizes of layers and regions may be exaggerated for illustrative purposes and, thus, are provided to illustrate the general structures of variants. Like reference numerals refer to like elements throughout.
Fig. 1 is a schematic block diagram of a spectroscopy system.
Fig. 2 is a detail view of the optical arrangement of the spectroscopy system of Fig. 1 while illuminating a sample using a spot size of light emitted by a light source of the system,
Fig. 3 is a detail view of the optical arrangement of the spectroscopy system of Fig. 1 while illuminating a sample using a different spot size of light emitted by a light source of the system,
Fig. 4 is a schematic spectrum of light recorded using a first spot size,
Fig. 5 is a schematic spectrum of light recorded using a second spot size,
Fig. 6 is a schematic representation of a data set in form of a spectrum showing a difference between the spectrum of Fig 4 and the spectrum of Fig. 5,
Fig. 7 is a flowchart of a method for enhancing a Raman contribution in a spectrum of a sample.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

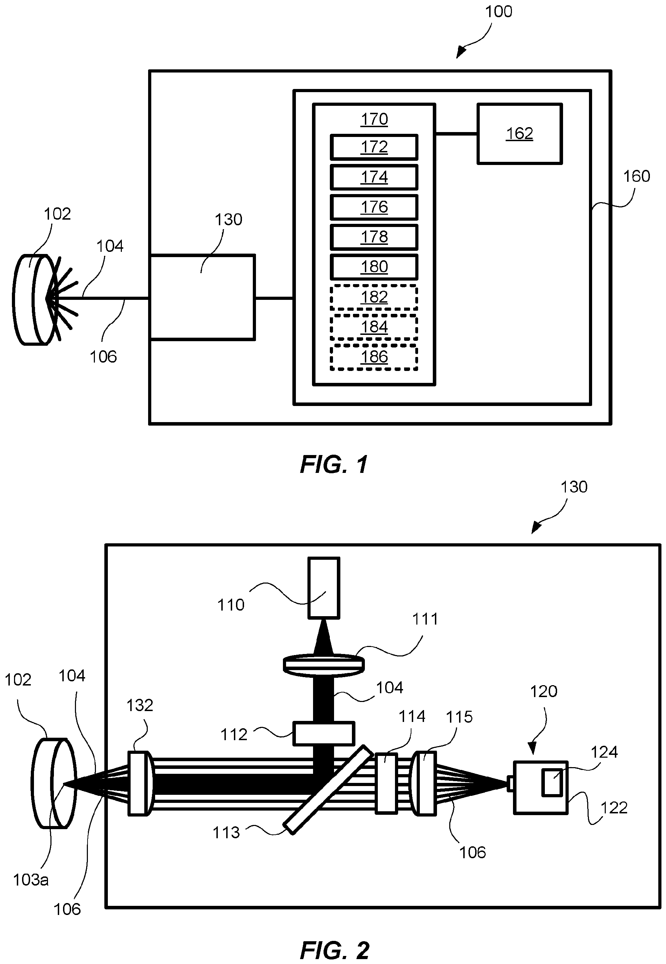

Fig. 1 schematically illustrates a block diagram of a spectroscopy system 100 in form of a Raman spectroscopy system 100. The depicted spectroscopy system 100 is designed to analyze in-elastic scattered light 106 from a sample 102. In other words, the depicted spectroscopy system 100 is designed to analyze a Raman contribution in light 106 scattered from the sample 102. Hence, the depicted spectroscopy system 100 includes a spectrometer which may analyze the Raman contribution in light 106 scattered form the sample 102. The sample 102 may for instance be a solid object, a powder, or a liquid to give a few non-limiting examples.

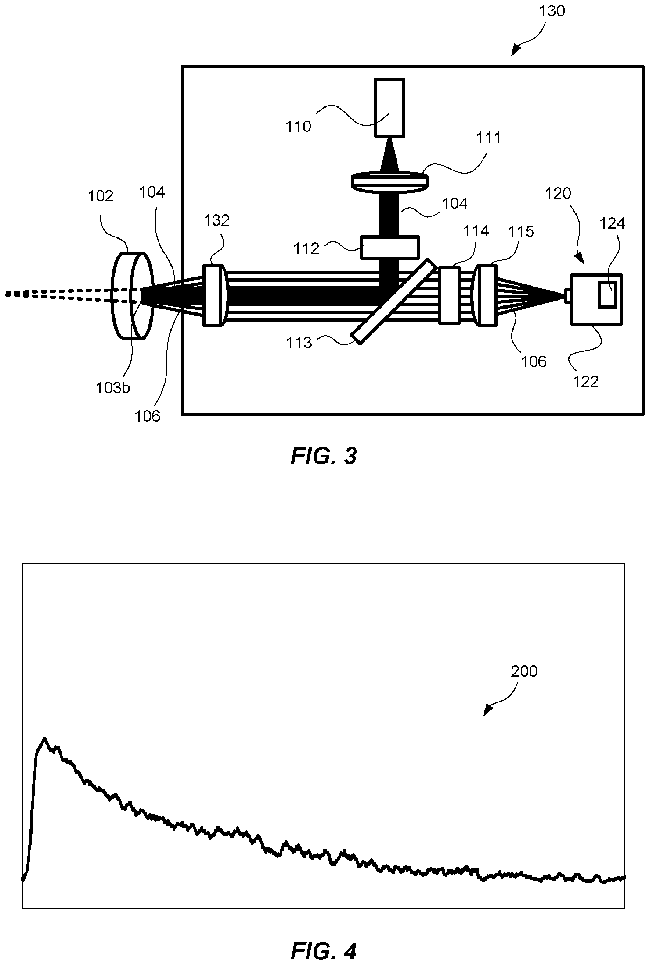

Generally speaking, the spectroscopy system 100 includes an optical arrangement 130 and circuitry 160. The circuitry 160 of Fig. 1 will be elaborated on further after the optical components have been discussion in connection with Figs. 2 and 3. The optical arrangement 130 and the circuitry 160 are connected to each other such that the respective components may communicate and cooperate in order to analyze light 106 scattered from the sample 102.

The depicted spectroscopy system 100 is configured to emit light 104 towards the sample 102. The emitted light 104 thus interacts with the sample 102 which scatters the light 104. The light 104 thus interacts with the sample 102 which scatters the light 104 elastically and in-elastically, hence resulting in scattered light 106. The scattered light 106 is receivable by the optical arrangement 130 of the depicted spectroscopy system 100. The optical arrangement 130 of the depicted spectroscopy system 100 is consequently configured to emit light 104 and receive and analyze scattered light 106.

The depicted spectroscopy system 100 is designed as a handheld spectroscopy system meaning that the spectroscopy system is suitable to be hand carried and hand operated by an operator of the spectroscopy system 100. Hence the spectroscopy system 100 includes its own power source and may consequently be used without any external power. Further, the depicted spectroscopy system 100 is self-sufficient in the sense that the spectroscopy system 100 may operate on its own without requiring a connection to any external entity or data source. However, the present disclosure may be used to advantage in non-handheld spectroscopy systems, such as spectroscopy systems used in laboratories. Moreover, the spectroscopy system 100 may be connect to e.g. the internet to exchange data such as measurement data or data related to firmware updates with external entities.

Now also referring to Fig. 2. Here is conceptually depicted the optical arrangement 130 of Fig. 1. In other words, Fig. 2 conceptually depicts the optical setup of the spectroscopy system 100 in Fig. 1. The depicted spectroscopy system 100 comprises an electromagnetic radiation source 110 in form of a laser 110. The laser 110 of the depicted spectroscopy system 100 emits light at a nominal wavelength of 785 nm. Hence, the laser 110 emits light in a narrow band with a peak intensity at 785 nm. However, other nominal wavelengths may be used to advantage.

The spectroscopy system 100 comprises a spectrograph unit 120. The spectrograph unit 120 comprises a spectrometer 122. The spectrometer 122 is configured to analyze a spectral content of light received at an entrance slit of the spectrometer 122. For that reason, a dispersive element of the spectrometer 122 separates the light received at the entrance slit onto a sensor 124 of the spectrometer 122. Hence, light received at the entrance slit is separated based on its wavelength components and received at different portions of the sensor 124. This means that the spectrograph unit 120 may record spectral information by means of the detector 124 of the spectrometer 122. In other words, the spectrometer 122 is configured to record a spectrum of light.

The spectroscopy system 100 comprises a focusing element 132 configured to focus light 104 from the laser 110 onto the sample 102.

Hence, the laser 110 emits electromagnetic radiation, in the form of monochromatic light having a wavelength of 785 nm, which passes through the focusing element 132. The focused light 104 hits the sample and illuminates a spot 103a of the sample 102 resulting in a scattering of the light 104. The scattered light 106 is focused and collected to reach a slit of the spectrometer 122 and is then received by the detector 124.

More specifically, the laser 110 emits light 104, i.e. laser light, that is collimated through a laser collimation lens 111. After the laser collimation lens 111, the light 104 propagates through a laser clean up filter 112 which has the purpose of filtering out undesired components of the light 104 emitted by the laser 110. After having passed through the laser clean up filter 112, the light 104 is redirected 90° by an interference filter 113. The interference filter 113 redirects the light 104 towards the sample 102. As can be seen in Fig. 2, the light 104 from the laser 110, i.e. the laser beam, is focused into a small concentrated spot 103a at the surface of the sample 102 by means of the focusing element 132. The size of the spot 103a is typically smaller than 20µm in diameter. The size of the spot 103a may however be altered by adjusting the focusing element 132. In other words, the size of the spot 103a may be altered by changing a focal length of the focusing element 132.

The light 104 focused on the sample 102 interacts with the molecules of the sample 102. The sample scatters photons of the light 104 elastically and in-elastically. The in-elastically scattered photons include so-called Raman photons. The scattered light 106 propagates trough the focusing element 132, the interference filter 113 and a long pass filter 114. The scattered light 106 is then focused onto the entrance slit of the spectrometer 122 by a focusing lens 115 arranged downstream the long pass filter 114.

The long pass filer 114 has the purpose of removing wavelengths below a threshold value which is slightly higher than the nominal wavelength of the laser. Hence, the long pass filter will in practice block and thus remove Rayleigh scattered light from the sample 102 while allowing in-elastically scattered Raman photons to pass. Hence, in-elastically scattered Raman photons will reach the entrance slit of the spectrometer 122 while elastically scattered Rayleigh photons are counteracted or prevented from reaching the entrance slit of the spectrometer 122.

The focusing element 132 which is configured to direct light emitted by the light source 110 towards the sample 102 is adjustable. More specially, the longitudinal position of a focal point of the focusing element 132 is adjustable. Hence, the focal point of the focusing element 132 may be moved in relation to the sample 102 along an optical axis of the focusing element 132. An adjustable focusing element of the above kind may be realized in many ways. For instance, a lens assembly with a variable focus may be used to advantage. However, in the depicted spectroscopy system 100 an adjustable focusing element 132 including a liquid lens 132 is used. In practice, the liquid lens 132 or tunable lens is combined with one ore more static glass lenses (not shown). However, in such arrangement, the focal point of the focusing element 132 is adjustable by adjusting the liquid lens 132.

The liquid lens 132 has a focal length which is dependent upon an applied focus voltage as is known in the art. As an example, the focusing element 132 of the depicted spectroscopy system 100 may for instance be capable of adjusting the focal length up to 4mm by applying a focus voltage in the range of 0-60V to the liquid lens 132 thereof. In such case, the liquid lens 132 of the focusing element 132 may have a focal length that varies with the applied focus voltage from 5 mm to infinity. The liquid lens may in such case be combined with an aspherical glass lens with a focal length of for instance 10 mm. By varying the applied focus voltage, the liquid lens may change the optical power of the focusing element 132, i.e. the liquid lens and the aspherical glass lens, such that the focal length of the focusing element 132 may for instance vary from 8 to 12 mm.

In Fig. 2 it is depicted how the light 104 emitted by the light source 110, i.e. the laser 110, is focused onto the surface of the sample 102 into a small focused spot 103a having a relatively speaking small spot size 103a.

Given the that the focal length of the liquid lens 132 may adjusted, the spot size 103a at the surface of the sample 102 may varied by adjusting the focal length of the liquid lens 132. As a remark, it is to be understood that the spot size 103a will also vary if a distance between the liquid lens 132 and the sample 102 varies.

Now referring also to Fig. 3. Fig. 3 shows the same optical arrangement 130 as Fig. 2. However, in Fig. 3, the focal length of the liquid lens 132 has been adjusted such that the focal point of the liquid lens 132 is moved further away from the spectroscopy system 100. The distance between the spectroscopy system 100 and the sample 102 is kept constant. In other words, in Fig. 3 the focal point of the liquid lens 132 lies beyond the surface of the sample 102 facing the spectroscopy system 100. In Fig. 3 it is depicted how the focal point of the liquid lens 132 lies beyond the sample 102. The fact that the focal point of the liquid lens 132 lies beyond the surface of the sample 102 facing the spectroscopy system 100 results in that the light 104, i.e. the laser light, is not focused on the surface of the sample 102 meaning that the light 104 impinges on a larger area of the surface of the sample 102. In other words, the light 104 emitted by the light source 110, i.e. the laser 110, is directed to the surface of the sample 102 into a larger spot as compared to Fig. 2, where the spot 103b of Fig. 3 having a relatively speaking large spot size 103b.

As a remark, it should be noted that the same effect may be achieved by adjusting the focal point of the liquid lens 132 such that focal point of the liquid lens 132 lies in front of the surface of the sample 102 facing the spectroscopy system 100, i.e. such that focal point of the liquid lens 132 between the sample 102 and the spectroscopy system 100.

Now also referring to Fig. 1., as discussed above, the spectroscopy system 100 comprises circuitry 160. The circuitry 160 is configured to execute different functions. The circuitry 160 comprises a processor 162 configured to execute different functions. The circuitry 160 further comprise a memory 170.

The circuitry 160 may be any type of circuitry 160 comprising a processing unit 162.

The circuitry 160 may physically comprise one single device. Alternatively, the circuitry 160 may be distributed over several devices or components of the spectroscopy system 100, such as over the processor 162 and the memory 170.

The processor 162 is further configured to communicate with other components of the spectroscopy system 100, such as with the memory 170, with the liquid lens 132 and with the sensor 124 of the spectrometer 122.

The processor 162 is configured to carry out overall control of functions and operations of the spectroscopy system 100. The circuitry 160 may include a processor 162 in the form of a central processing unit (CPU), a microcontroller, or a microprocessor. The processor 162 of the depicted spectroscopy device is configured to execute program code stored in the memory 170, in order to carry out functions and operations of the circuitry 106 and hence of the spectroscopy device 100.

The memory 170 may be one or more of a buffer, a flash memory, a hard drive, a removable media, a volatile memory, a non-volatile memory, a random access memory (RAM), or another suitable device. In a typical arrangement of the spectroscopy device 100, the memory 170 may include a non-volatile memory for long term data storage and a volatile memory that functions as system memory for the circuitry 162. The memory 170 may exchange data with the circuitry 160 over a data bus. The memory 170 may exchange data with the sensor 124 of the spectrometer 122 over the data bus Accompanying control lines and an address bus between the memory 170 and the circuitry 160 also may be present.

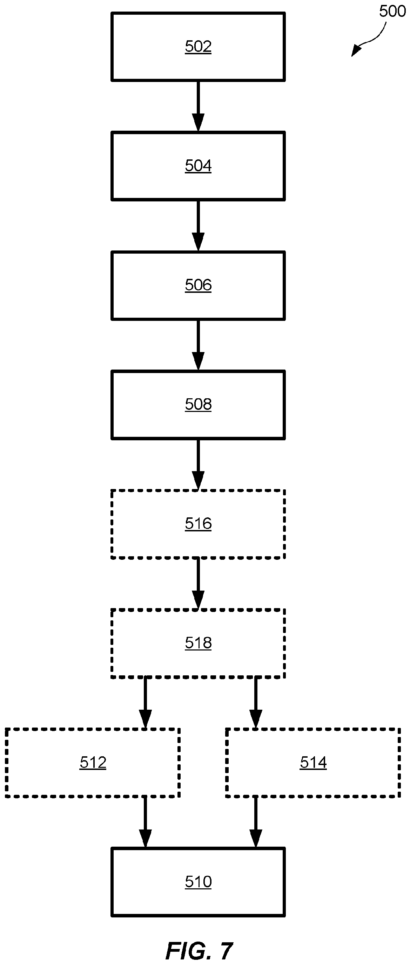

Functions and operations of the circuitry 160 of the spectroscopy system 100 may be embodied in the form of executable logic routines (e.g., lines of code, software programs, etc.) that are stored on a non-transitory computer readable medium (e.g., the memory 170) of the spectroscopy system 100 and are executed by the circuitry 162 (e.g., using the processor 164). Furthermore, the functions and operations of the circuitry 160 of the spectroscopy system 100 may be a stand-alone software application or form a part of a software application that carries out additional tasks related to the spectroscopy system 100. The described functions and operations may be considered a method that the corresponding device is configured to carry out. Such a method will also be further discussed below in connection with Fig. 7. Also, while the described functions and operations may be implemented in software, such functionality may as well be carried out via dedicated hardware or firmware, or some combination of hardware, firmware and/or software.

The processor 162 of the circuitry 160 is configured to execute a first focal point function 172 configured to set a first longitudinal position of the focal point of the focusing element 132. It is to be noted that in the depicted spectroscopy system 100, the focusing element 132 is a liquid lens 132. However, other types of focusing elements 132 may be used to advantage. By setting a first longitudinal position of the focal point of the focusing element 132 a first spot size 103b of light 104 emitted by the light source 110 at a position of the sample 102 is set. The first spot size 103b is depicted in Fig. 3. In Fig. 3 it may be seen that the first spot size 130b is a relatively speaking large spot size 130b where the light 104 emitted by the light source 110 is not focused at a position of the sample 102. In other words, the light 104 emitted by the light source 110 is distributed over an area corresponding to the spot size 103b at a position of the sample 102.

By setting a longitudinal position of the focal point of the focusing element 132 while keeping the sample at a constant distance from the spectroscopy system 100 a spot size of light 104 emitted by the light source 110 at a position of the sample 102 may be altered.

In the depicted spectroscopy system 100 the focusing element 132 is a liquid lens 132 having a focal length being dependent upon an applied focus voltage. Hence, in the depicted spectroscopy system 100 the first focal point function 172 is configured to set the longitudinal position of the focal point of the focusing element 132 by being configured to apply a focus voltage to the liquid lens 132.

Now also referring to Fig. 4. The processor 162 of the circuitry 160 is configured to execute a first record function 174 configured to record, using the spectrometer 122, a first spectrum of light 200 in response to being illuminated with light 104 having the first spot size 103b.The first spectrum of light 200 comprising information associated with ambient light and a first measurement response. In other words, the first spectrum of light 200 typically includes a contribution from ambient light entering the spectroscopy system 100 and reaching the detector 124 of the spectrometer and a contribution from light 104 of the light source 110 having interacted with the sample 102.

The first measurement response comprises in turn a first optical response and a first Raman response of the sample 102. The first optical response may be related to any type of interaction or scattering by the sample 102 of light 104 emitted by the light source 110 apart from Raman scattering of the sample. The first optical response may include a fluorescence response of the sample 102.

Fig. 4 illustrates a first spectrum of light 200 from Micro Crystalline Cellulose, MMC, recorded using the spectrometer 122, in response to being illuminated with light 104 having the first spot size 103b. The MCC used is of pharmaceutical grade. That is, the sample 102 includes MCC. The X-axis of the spectrum 200 of Fig. 4 represents wavenumber, i.e. the number of waves per unit distance, whereas the Y-axis represents relative intensities for the respective wavenumbers. More specifically, the spectrum is based on data relating to a number of counts for a detector at a certain wavenumber.

The first spectrum of light 200 is recorded by a spectrometer while illuminating the MCC with monochromatic light having a wavelength of 785nm while using a first spot size 103b. When recording the first spectrum of light 200 a laser 110 having a power of 300 mW was illuminating the sample 102 using a spot size 103b having an area of about 0.130 mm². Hence the power of the laser 110 was distributed over the area of the spot size 103b. The actual data of the spectrum 200 of Fig. 4 has been filtered using a mean filter to better illustrate the overall shape of the first spectrum of light 200. In other words, of the spectrum 200 of Fig. 4 has been filtered using a mean filter to increase the readability of the spectrum 200. The first spectrum of light 200 may be said to show a generally speaking featureless background.

It is to be noted that the first spectrum of light 200 include a first Raman response of the sample 102. However, the first Raman response of the sample 102 is a relatively weak Raman response since the energy of the laser 110 is distributed over the area of the spot size 103b. This means that any Raman peaks related to the MCC are not clearly visible in the first spectrum of light 200. The first spectrum of light 200 is in practice dominated by a fluorescence response form the sample 102. The fluorescence response from the sample 102 is typically being triggered the light 104 from the light source 110. The first spectrum 200 also include light reflected from the sample 102 and Rayleigh scattered light from the sample 102.

Additionally, the first spectrum may include a contribution relating to fixed pattern noise or thermal noise of the detector 124 of the spectrometer 122.

The processor 162 of the circuitry 160 is configured to execute a second focal point function 176 configured to set a second longitudinal position of the focal point of the focusing element 132, i.e. the liquid lens 132 of the depicted spectroscopy system 100. By setting a second longitudinal position of the focal point of the focusing element 132 a second spot size 103a of light 104 emitted by the light source 110 at a position of the sample 102 is set. The second spot size 103a is depicted in Fig. 2. In Fig. 2 it may be seen that the second spot size 130a is a relatively speaking small spot size 103a where the light 104 emitted by the light source 110 is focused at a position of the sample 102. In other words, the light 104 emitted by the light source 110 is distributed over an area corresponding to the spot size 103a at a position of the sample 102.

As discussed above, in the depicted spectroscopy system 100 the focusing element 132 is a liquid lens 132 having a focal length being dependent upon an applied focus voltage. Hence, in the depicted spectroscopy system 100 the second focal point function 176 is configured to set the longitudinal position of the focal point of the focusing element 132 by being configured to apply a focus voltage to the liquid lens 132.

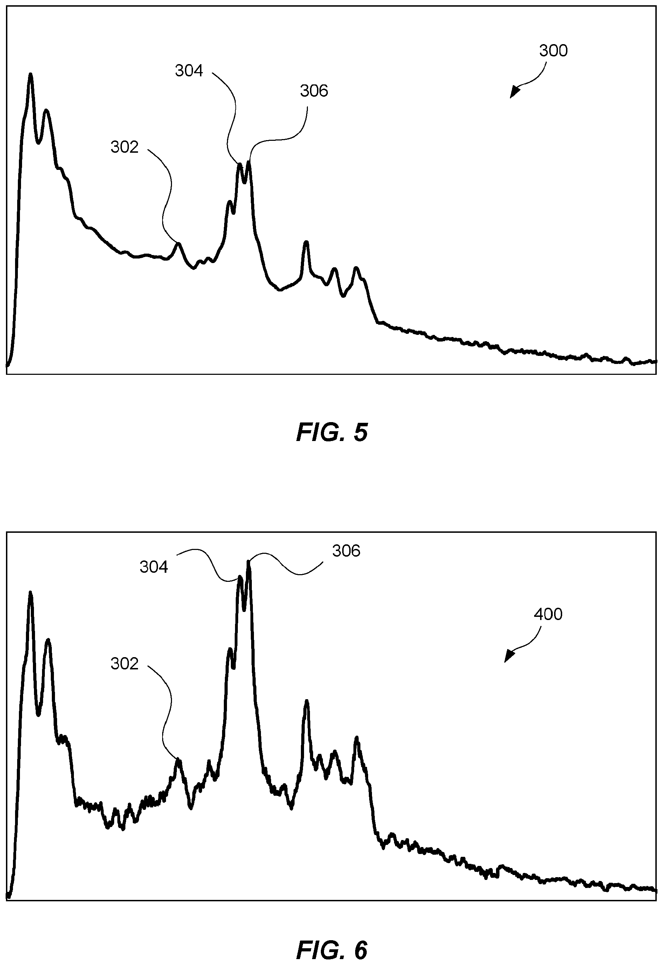

Now also referring to Fig. 5. The processor 162 of the circuitry 160 is configured to execute a second record function 178 configured to record, using the spectrometer 122, a second spectrum of light 300 in response to being illuminated with light 104 having the second spot size 103a.The second spectrum of light 300 comprising information associated with ambient light and a second measurement response. In other words, the second spectrum of light 300 typically include a contribution form ambient light entering the spectroscopy system 100 and reaching the detector 124 of the spectrometer and a contribution from light 104 of the light source 110 having interacted with the sample 102.

The second measurement response comprises in turn a second optical response and a second Raman response of the sample 102. The second optical response may, like the first optical response, be related to any type of interaction or scattering by the sample 102 of light 104 emitted by the light source 110 apart from Raman scattering of the sample.

Fig. 5 illustrates a second spectrum of light 300 from the same sample of MMC as in the first spectrum of ligth 200. The X-axis of the spectrum 300 of Fig. 5 represents wavenumber, whereas the Y-axis represents relative intensities for the respective wavenumbers. The scales of the X-axis and Y axis of the spectra in Figs 4 and 5 are the same. The spectrum 300 of Fig. 5 has been subjected to general signal processing aiming at making features of the spectrum 300 appear more clearly. However, the second spectrum of light 300 is recorded using the spectrometer 122, in response to being illuminated with light 104 having the second spot size 103a. The second spectrum of light 300 is recorded by the same spectrometer while illuminating the MCC, i.e. the sample 102, with the same monochromatic light source 110 while using the second spot size 103a for a period of 5 min. Hence, when recording the second spectrum 300 spectrum of light the same laser 110 having a power of 300 mW was illuminating the sample 102 using a spot size 103a having an area of about 0.0013 mm². Hence the power of the laser 110 was distributed over the area of the spot size 103a. The area of the spot size 103b is consequently 10 larger than the area of the spot size 103a. The data of the spectrum 300 of Fig. 5 has been filtered using a mean filter to better illustrate the overall shape of the second spectrum of light 300. In other words, of the spectrum 300 of Fig. 5 has been filtered using a mean filter to increase the readability of the spectrum 300. The second spectrum of light 300 and the first spectrum of light 200 have been filtered using the same mean filter.

It is to be noted that the second spectrum of light 300 include a second Raman response of the sample 102. However, the second Raman response of the sample 102 is a relatively speaking strong Raman response since the energy of the laser 110 is distributed over the small area of the spot size 103a. This means that Raman peaks related to the MCC are now visible in the second spectrum of light 300. Hence, a contribution, to the first measurement response, of the first Raman response in relation to a contribution of the first optical response is smaller than a contribution, to the second measurement response, of the second Raman response in relation to the second optical response.

Three Raman peaks 302, 304, 306 corresponding to Raman shifts 902, 1098 and 1120 cm⁻¹ have been marked in the second spectrum of light 300. The Raman peaks 302, 304, 306 are indicated for illustrative reasons and for increasing the understanding of the present disclosure. The second spectrum of light 300 includes more Raman Peaks not indicted in the second spectrum of light 300.

However, despite the fact that Raman peaks of the MCC are visible in the second spectrum of light 300, the second spectrum of light 300 is still highly influenced by a fluorescence response form the sample 102, such that the fluorescence contribution to the second spectrum of light 300 makes determination of Raman peaks of the MCC troublesome and moreover prone to errors. Further, the second spectrum of light 300 also include light reflected from the sample 102 and Rayleigh scattered light from the sample 102. The light reflected from the sample 102 and Rayleigh scattered light from the sample 102 will thus influence the second spectrum of light 300 in an unfavorable way.

In other words, it may be troublesome to accurately determine e.g. the respective Raman shifts 902, 1098 and 1120 cm⁻¹ of the Raman peaks 302, 304, 306 of the second spectrum of light 300. The same holds true for other features or peaks not explicitly indicated in the second spectrum of light 300. The fluorescence contribution to the second spectrum of light 300 may moreover obscure Raman peaks of the MCC hindering that the obscured peaks may be determined at all. The fluorescence from the sample 102 typically being triggered by the light 104 from the light source 110.

Additionally, the second spectrum may include a contribution relating to fixed pattern noise or thermal noise of the detector 124 of the spectrometer 122.

Now also referring to Fig. 6. The processor 162 of the circuitry 160 is configured to execute a form function 180 configured to form a data set comprising information associated with the spectrum of the sample 102 based on a dissimilarity between the first spectrum 200 and the second spectrum 300. The dissimilarity between the first spectrum 200 and the second spectrum 300 may thus relate to the fact that the first spot size 103b is larger than the second spot size 103a, whereby a contribution, to the first measurement response, of the first Raman response in relation to a contribution of the first optical response is smaller than a contribution, to the second measurement response, of the second Raman response in relation to the second optical response. Hence by forming a data set based on a dissimilarity between the first spectrum 200 and the second spectrum 300 a contribution of a Raman response to the formed data set may be enhanced. In other words, a signal to noise ratio may be significantly improved. As a result, an improved determination or matching of a substance of the sample 102 may be enabled.

The data set formed by the form function 180 may have any suitable data structure and may comprise information associated with the spectrum of the sample 102 in any suitable form. The formed data set may be a spectrum 400. Put differently, the form function 180 may be configured to form a spectrum 400. The spectrum 400 may be a spectrum of sample 102 with an enhanced Raman contribution.

The formed data set may be a part of a spectrum. The formed data set may be a histogram. The formed data set may be a text string or a matrix indicating Raman shifts of the sample 102. The formed data set may be a text string or a matrix indicating Raman shifts of the sample 102 and their respective intensities. Other data structures may be used to advantage.

Several strategies may be used to form the data set comprising information associated with the spectrum of the sample 102 based on the dissimilarity between the first spectrum 200 and the second spectrum 300.

The form function 180 may be configured to form the data set based on a difference between the first spectrum 200 and the second spectrum 300. For that reason, the processor 162 of the circuitry 160 may be configured to execute a subtraction function 182 configured to form a difference between the first spectrum 200 and the second spectrum 300, wherein the form function 180 is configured to form the data set based on the formed difference.

Fig. 6 graphically illustrates a data set formed by the form function 180. The formed data set graphically illustrated in Fig. 6 is a spectrum 400. The spectrum 400, i.e. the data set formed by the form function, has been formed by subtracting the spectrum 200 of Fig. 4 from the spectrum 300 of Fig 5. The X-axis of the spectrum 400 of Fig. 6 represents wavenumber, whereas the Y-axis represents relative intensities for the respective wavenumbers. The scales of the X-axis of the spectra in Figs 4, 5 and 6 are the same.

As can be seen in Fig. 6, the Raman peaks 302, 304, 306 corresponding to Raman shifts 902, 1098 and 1120 cm⁻¹ appear more clearly than in the spectrum 300 of Fig. 5. The same holds true for other features or peaks not explicitly indicated in the spectrum 400 of Fig. 6. In other words, a signal to noise ratio is improved in the spectrum 400 of Fig. 6. Hence, the contribution of the Raman response of the sample 102 is enhanced in the formed spectrum 400 of Fig. 6. In other words, the contribution of the Raman response of the sample 102 is enhanced in the data set formed by the form function 180. In fact, all Raman peaks of the MCC sample 102 appear more clearly in the spectrum 400 than in the spectrum 300. In other words, an overall signal to noise ratio is significantly improved in the spectrum 400 of Fig. 6 as compared to the spectrum 300 of Fig. 5. Further, the spectrum 400 of Fig. 6 is significantly more suitable for further data analysis aiming at determination, characterization or matching of the MCC, i.e. the sample 102.

The formed spectrum 400 does in turn allow for more accurate and less error prone determination, characterization or matching of the MCC sample since the actual Raman contribution to the spectrum 400 is enhanced. In practice the actual Raman contribution to the spectrum 400 will be enhanced in relation to a standard spectrum of MCC recorded using a light beam focused onto the MCC sample. The above reasoning applies equally well to other substances than the MCC sample which has been used when elaborating on the features of the spectroscopy system 100.

In other words, data sets formed as explained above for various substances may be used to determine, characterize or match the substances more easily and more accurately with fewer errors, since the actual Raman response of the sample or substance at hand will be enhanced and thus easier to interpret or read out in the formed data set. This may be related to the fact that the formed data set at hand may be significantly more suitable for further data analysis aiming at determination, characterization or matching of the substance at hand.

In yet other words, the formed data set having an enhanced Raman contribution will facilitate characterization or matching of various substances based on their molecular "fingerprints", since the actual Raman response of the sample will be enhanced and thus easier to interpret or read out in the formed data set.

If a sample or substance cannot be matched based on the formed data set, it may be advantageous to let the spectroscopy system 100 execute the respective functions a predetermined number of times, such as five times, while using a first exposure time or record time. If the sample or substance at hand still cannot be matched, it may be advantageous to let the spectroscopy system 100 execute the respective functions a predetermined number of times, such as five times, while using a second exposure time or record time which is larger than the first exposure time or record time. If the sample or substance at hand still cannot be matched, it may be advantageous to let the spectroscopy system 100 execute the respective functions a predetermined number of times, such as five times, while using a third exposure time or record time which is larger than the second exposure time or record time, etc..

The form function 180 may be configured to form the data set based on a ratio between the first spectrum 200 and the second spectrum 300. For that reason, the processor 162 of the circuitry 160 may be configured to execute a division function 184 configured to form a ratio between the first spectrum 200 and the second spectrum 300, wherein the form function 180 is configured to form the data set based on the formed ratio.

By forming a ratio between the first spectrum 200 and the second spectrum 300 and forming the data set based on the formed ratio, a contribution of a Raman response to the formed data set may be enhanced similarly to forming a difference between the first spectrum 200 and the second spectrum 300. The formed data may also in this case have any suitable data structure and may comprise information associated with the spectrum of the sample 102 in any suitable form. The formed data set may consequently be a spectrum also in this case.

The processor 162 of the circuitry 160 may be configured to execute a normalization function 186 configured to normalize the first spectrum 200 and the second spectrum 300, wherein the form function 180 is configured to form the data set based on a difference between the normalized first spectrum 200 and the normalized second spectrum 300.

By normalizing the first spectrum 200 and the second spectrum 300 prior to forming the data set based on a difference between the normalized first spectrum 200 and the normalized second spectrum 300, signal levels of the first spectrum 200 and the second spectrum 300 may be equalized or made more similar. In practice, the contribution to the first spectrum 200 and the contribution to the second spectrum 300 not being the respective Raman contributions may be normalized in the sense that the signal levels are similar. In practice, the first spectrum and the second spectrum may be normalized such that a signal level of fluorescence in the first spectrum is similar to a signal level of fluorescence in the second spectrum. Thereby, the contribution of the Raman response of the sample 102 to the formed data set may be further enhanced.

Now also referring to Fig. 7. A method 500 for enhancing a Raman contribution in a spectrum of a sample 102 will be described. The method 500 for enhancing a Raman contribution in a spectrum of a sample 102 will be described in a context where the method 500 is performed in a spectroscopy system 100 of the above-described kind. As will be evident form the below, the method 500 may significantly enhance a Raman contribution in a spectrum of a sample 102. In other words, the method 500 may significantly improve a signal to noise ratio. In yet other words, the method 500 may significantly improve a signal to noise ratio in a formed data set comprising information associated with the spectrum of the sample 102. The acts of the method 500 may be performed in any suitable order. However, in the below, the acts of the method 500 are described in a certain sequence to improve readability of the disclosure of the method 500.

The method 500 comprises setting 502 a first spot size 103b of light 104 emitted by a light source 110 at a position of the sample 102. As discussed above, the spot size may be set by altering a focal length of a focusing element 132 of the spectroscopy system 100.

The method 500 proceeds by recording 504 a first spectrum of light 200 comprising information associated with ambient light and a first measurement response. Wherein the first measurement response comprises a first optical response and a first Raman response of the sample 102 in response to being illuminated with light 104 having the first spot size 103b. The first optical response of the first spectrum 200 may comprises a first fluorescence response of the sample 102. The first optical response of the first spectrum 200 may comprise one or more of: light reflected from the sample 102; and Rayleigh scattered light from the sample 102. As discussed above, the spectrum 200 may be recorded using a spectrometer 122 of the of the spectroscopy system 100.

The method 500 proceeds by setting 506 a second spot size 103a of light 104 emitted by the light source 110 at a position of the sample 102.

The method 500 proceeds by recording 508 a second spectrum of light 300 comprising information associated with ambient light and a second measurement response. Wherein the second measurement response comprises a second optical response and a second Raman response of the sample 102 in response to being illuminated with light 104 having the second spot size 103a. The second optical response of the second spectrum 300 may comprises a second fluorescence response of the sample 102. The second optical response of the second spectrum 300 may comprise one or more of: light reflected from the sample 102; and Rayleigh scattered light from the sample 102. As discussed above, the spectrum 300 may be recorded using a spectrometer 122 of the of the spectroscopy system 100.

In the method 500 the first spot size 103b is larger than the second spot size 103a. By setting a first spot size 103b which is larger than the second spot size 103a a contribution, to the first measurement response, of the first Raman response in relation to a contribution of the first optical response is smaller than a contribution, to the second measurement response, of the second Raman response in relation to the second optical response.

The method 500 proceeds by forming 510 a data set based on a dissimilarity between the first spectrum 200 and the second spectrum 300. Thereby a contribution of a Raman response to the formed data set is enhanced. The act of forming 510 a data set may be an act of forming a spectrum 400. Such spectrum 400 of the sample 102 may be a spectrum 400 with an enhanced Raman contribution.

As discussed above, a signal to noise ratio may be significantly improved in the formed data set. The formed data set may be spectrum 400.

Hence, the formed data set having an enhanced Raman contribution will facilitate characterization or matching of various substances based on their molecular "fingerprints", since the actual Raman response of the sample will be enhanced and thus easier to interpret or read out in the formed data set.

If a sample or substance cannot be matched based on the formed data set, it may be advantageous to run the method 500 in a loop a predetermined number of times, such as five times, while using a first exposure time or record time. If the sample or substance at hand still cannot be matched, it may be advantageous to continue to let the method 500 run in a loop a predetermined number of times, such as five times, while using a second exposure time or record time which is larger than the first exposure time or record time. If the sample or substance at hand still cannot be matched, it may be advantageous to continue to let the method 500 run in a loop a predetermined number of times, such as five times, while using a third exposure time or record time which is larger than the second exposure time or record time, etc..

The acts 502, 506 of the method 500 of setting the spot sizes 103a, 103b may comprise applying a focus voltage to a liquid lens 132. The liquid lens 132 being configured to focus the light 104 emitted by the light source 110. The liquid lens 132 having a focal length being dependent upon the applied focus voltage. As discussed above, the spot size 103a. 103b may be altered by changing a focal length of the liquid lens 132 of the spectroscopy system 100.

The method 500 may comprise forming 512 a difference between the first spectrum 200 and the second spectrum 300, wherein the data set is formed based on the formed difference. As discussed above, the contribution of the Raman response of the sample 102 may be enhanced in the data set by forming the data set based on the formed difference.

As an alternative to forming 512 a difference between the first spectrum 200 and the second spectrum 300, the method 500 may comprise forming 514 a ratio between the first spectrum and the second spectrum, wherein the data set is formed based on the formed ratio. As discussed above, the contribution of the Raman response of the sample 102 may be enhanced in the data set by forming the data set based on the formed ratio.

The method 500 may comprise normalizing 516 the first spectrum 200.

The method 500 may comprise normalizing 518 the second spectrum 300.

The data set may be formed based on a dissimilarity between the normalized first spectrum 200 and the normalized second spectrum 300. As discussed above, the contribution of the Raman response of the sample 102 to the formed data set may be further enhanced.

The person skilled in the art realizes that the present inventive concept by no means is limited to the preferred variants described above. On the contrary, many modifications and variations are possible within the scope of the appended claims. Additionally, variations to the disclosed variants can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method (500) for enhancing a Raman contribution in a spectrum of a sample (102), the method comprising:
setting (502) a first spot size (103b) of light (104) emitted by a light source (110) at a position of the sample (102);
recording (504) a first spectrum of light (200) comprising information associated with ambient light and a first measurement response, wherein the first measurement response comprises a first optical response and a first Raman response of the sample (102) in response to being illuminated with light (104) having the first spot size (103b);
setting (506) a second spot size (103a) of light (104) emitted by the light source (110) at a position of the sample (102);
recording (508) a second spectrum of light (300) comprising information associated with ambient light and a second measurement response, wherein the second measurement response comprises a second optical response and a second Raman response of the sample (102) in response to being illuminated with light (104) having the second spot size (103a);
wherein the first spot size (103b) is larger than the second spot size (103a), whereby a contribution, to the first measurement response, of the first Raman response in relation to a contribution of the first optical response is smaller than a contribution, to the second measurement response, of the second Raman response in relation to the second optical response; and
forming (510) a data set (400) based on a dissimilarity between the first spectrum (200) and the second spectrum (300), thereby enhancing a contribution of a Raman response to the formed data set (400).

2. The method (500) according to claim 1, wherein the act (502, 506) of setting the spot size (103a, 103b) comprises:
applying a focus voltage to a liquid lens (132) configured to focus the light (104) emitted by the light source (110), the liquid lens (132) having a focal length being dependent upon the applied focus voltage.

3. The method (500) according to claim 1 or 2, wherein the first optical response comprises a first fluorescence response of the sample (102); and
wherein the second optical response comprises a second fluorescence response of the sample (102).

4. The method (500) according to any one of claims 1-3, wherein the first optical response and/or the second optical response comprises one or more of:
light reflected from the sample (102); and
Rayleigh scattered light from the sample (102).

5. The method (500) according to any one of claims 1-4, further comprising:
forming (512) a difference between the first spectrum (200) and the second spectrum (300); and
wherein the data set (400) is formed based on the formed difference.

6. The method (500) according to any one of claims 1-4, further comprising:
forming (514) a ratio between the first spectrum (200) and the second spectrum (300); and
wherein the data set is formed based on the formed ratio.

7. The method (500) according to any one of claims 1-6, further comprising:
normalizing (516) the first spectrum (200);
normalizing (518) the second spectrum (300); and
wherein the data set is formed based on a dissimilarity between the normalized first spectrum (200) and the normalized second spectrum (300).

8. The method (500) according to any one of claims 1-7, wherein the formed data set (400) is a spectrum (400).

9. A spectroscopy system (100) comprising:
a light source (110);
a focusing element (132) configured to direct light (104) emitted by the light source (110) towards a sample (102), wherein a longitudinal position of a focal point of the focusing element (132) is adjustable;
a spectrometer (122) configured to record a spectrum of light; and
circuitry (160) configured to execute:
a first focal point function (172) configured to set a first longitudinal position of the focal point of the focusing element (132), whereby a first spot size (103b) of light (104) emitted by the light source (110) at a position of the sample (102) is set,
a first record function (174) configured to record, using the spectrometer (122), a first spectrum of light (200) comprising information associated with ambient light and a first measurement response, wherein the first measurement response comprises a first optical response and a first Raman response of the sample (102) in response to being illuminated with light (104) having the first spot size (103b),
a second focal point function (176) configured to set a second longitudinal position of the focal point of the focusing element (132), whereby a second spot size (103b) of light (104) emitted by the light source (110) at a position of the sample (102) is set,
a second record function (178) configured to record, using the spectrometer (122), a second spectrum of light (300) comprising information associated with ambient light and a second measurement response, wherein the second measurement response comprises a second optical response and a second Raman response of the sample (102) in response to being illuminated with light (104) having the second spot size (103a), and
a form function (180) configured to form a data set (400) comprising information associated with a spectrum of the sample based on a dissimilarity between the first spectrum (200) and the second spectrum (300); and
wherein the first spot size (103b) is larger than the second spot size (103a), whereby a contribution, to the first measurement response, of the first Raman response in relation to a contribution of the first optical response is smaller than a contribution, to the second measurement response, of the second Raman response in relation to the second optical response, whereby a contribution of a Raman response to the formed data set (400) is enhanced.

10. The spectroscopy system (100) according to claim 9, wherein the focusing element (132) comprises a liquid lens (132), the liquid lens (132) having a focal length being dependent upon an applied focus voltage and, wherein the first focal point function (172) and the second focal point function (176) are configured to set the longitudinal position of the focal point of the focusing element (132) by being configured to:
apply a focus voltage to the liquid lens (132).

11. The spectroscopy system (100) according to claim 9 or 10, wherein the circuitry (160) is further configured to execute:
a subtraction function (182) configured to form a difference between the first spectrum (200) and the second spectrum (300); and
wherein the form function (180) is configured to form the data set (400) based on the formed difference.

12. The spectroscopy system (100) according to claim 9 or 10, wherein the circuitry (160) is further configured to execute:
a division function (184) configured to form a ratio between the first spectrum (200) and the second spectrum (300); and
wherein the form function (180) is configured to form the data set based on the formed ratio.

13. The spectroscopy system (100) according to any one of claims 9-12, wherein the circuitry (160) is further configured to execute:
a normalization function (186) configured to normalize the first spectrum (200) and the second spectrum (300); and
wherein the form function (180) is configured to form the data set based on a difference between the normalized first spectrum (200) and the normalized second spectrum (300).

14. The spectroscopy system (100) according to any one of claims 9-13, wherein the formed data (400) set is a spectrum (400).

15. The spectroscopy system (100) according to any one of claims 9-14, wherein the spectroscopy system (100) is a handheld spectroscopy system (100).

16. A non-transitory computer-readable storage medium comprising program code portions which, when executed by a device having processing capabilities, performs the method according to any one of claims 1-8.
